# EUROPÄISCHE PATENTSCHRIFT

(11) **EP 2 700 499 B1**
(45) Veröffentlichungstag und Bekanntmachung des Hinweises auf die Patenterteilung: **10.06.2015**
(21) Anmeldenummer: 13075052.4
(22) Anmeldetag: 06.08.2013
(51) Int. Cl.: B32B 1/08, F16L 9/02

(54) **Kunststoffummantelte Rohrleitung aus Stahl**
Plastic clad steel piping
Conduite en acier enrobée de matière plastique

(30) Priorität: 24.08.2012 DE 102012017223
(43) Veröffentlichungstag der Anmeldung: 26.02.2014
(73) Patentinhaber: Salzgitter Mannesmann Line Pipe Gmbh, 57074 Siegen (DE)
(72) Erfinder: Winkels, Jörn, 59457 Werl (DE); Kocks, Hans-Jürgen, Dr., 57258 Freudenberg (DE)
(74) Vertreter: Meissner, Peter E.

(56) Entgegenhaltungen:
- DATABASE WPI Week 200423 Thomson Scientific, London, GB; AN 2004-242259 XP002715164, -& JP 2003 314753 A (NKK CORP) 6. November 2003 (2003-11-06)

## Beschreibung

Die Erfindung betrifft eine kunststoffummantelte Rohrleitung aus Stahl zum Transport von flüssigen oder gasförmigen Medien, gemäß dem Oberbegriff des Patentanspruches 1.

Zu transportierende Medien können beispielsweise Wasser, Öl, Erdgas oder auch andere Medien sein. Die aus einzelnen zusammengesetzten Rohren bestehende Rohrleitung kann sowohl unterirdisch als auch oberirdisch oder in Wasser verlegt sein.

Rohrleitungen können je nach Verlegung durch Erdreich, Atmosphäre und Wasser korrosiv oder mechanisch beansprucht werden. Bei ummantelten Rohrleitungen kann dies zu einer Beschädigung der Beschichtung und zu Unterrostungen führen. Beschädigungen der Ummantelung können auch bereits schon bei der Verlegung der Rohrleitung auftreten und zum späteren Durchkorrodieren des Stahlrohres und damit zur Undichtigkeit der Rohrleitung führen.

Bei freiverlegten, erdverlegten und unter Wasser verlegten Rohrleitungen hat sich eine Ummantelung aus Kunststoff als Korrosionsschutz bewährt. Bevorzugt werden dafür Epoxidharz, Polyethylen, Polypropylen, Polyurethan und Polyamid verwendet.

Da die Korrosionsschutzschicht häufig nur 1 bis 2 mm dick ist, besteht das Problem, diese vor mechanischen Beschädigungen beim Transport und bei der Verlegung der Rohrleitung zu schützen. Die beschichteten Rohre werden daher zusätzlich mit einem weiteren aus einem härteren Material bestehenden Schutzmantel umhüllt.

Eine solche kunststoffummantelte Rohrleitung ist z.B. aus der JP 2003314753 A bekannt. Die erste auf das Leitungsrohr applizierte Schicht dient dabei dem eigentlichen Korrosionsschutz und die zweite Schicht dem Schutz vor mechanischen Beschädigungen, die z.B. beim Handling oder bei der Verlegung der Rohre auftreten können.

Beispielsweise kann die Ummantelung des Stahlrohrs aus einer 2 mm dicken Polyethylenumhüllung und einer darauf aufgebrachten Umhüllung aus 3 mm dickem Polypropylen oder Polyamid bestehen.

Die Effektivität des Schutzes einer Ummantelung ist abhängig von deren Qualität, d.h. von der Fehlerfreiheit, der Beschichtung. Fehler oder Beschädigungen an der Beschichtung, die einen elektrischen Kontakt des Rohres mit Erdreich oder Wasser verursachen, ermöglichen einen Korrosionsangriff auf das Stahlrohr, der sich in großflächigen Delaminationen der Beschichtung auswirken und letztendlich zum Ausfall der Rohrleitung führen kann. Der Grad der Delamination ist abhängig von der Art des Beschichtungssystems und von den vorliegenden Korrosionsbedingungen, wie z.B. von der Leitfähigkeit des Erdreiches, des pH-Wertes, etc.

Neben möglichen Beschädigungen der Rohrleitung bei Transport oder Verlegung, können außerdem große mechanische Beanspruchungen der Ummantelung z.B. bei der grabenlosen Verlegung auftreten, bei der das ummantelte Rohr in eine Bohrung oder in eine bereits vorhandene Rohrleitung eingezogen wird, wobei nicht zu unterschätzende Scherkräfte auf die Schichten der Ummantelung einwirken.

Wenn die Haftung der aufeinanderliegenden Schichten nicht groß genug ist, kann es zu einer Relativverschiebung der Schichten kommen, mit der Folge, dass die Rohrleitung mit erheblicher Nacharbeit saniert werden muss.

Zudem können bereits während der Produktion Scherkräfte beispielsweise bei der mechanischen Bearbeitung der Rohrenden zur Schweißnahtvorbereitung auftreten, bei der die Ummantelung stufig vom Rohrende abgearbeitet wird und bei der die einzelnen Schichten der Ummantelung standhalten müssen, d.h. eine Relativverschiebung zwischen den Schichten darf nicht auftreten.

Um eine Relativverschiebung der Schichten zueinander zu verhindern, werden üblicherweise die Lagen der Ummantelung im heißen Zustand miteinander stoffschlüssig verbunden oder es wird zwischen den Schichten ein Kleber aufgetragen, der den Haftverbund der einzelnen Ummantelungsschichten sicherstellen soll.

Derart mehrschichtig ummantelte Rohrleitungen weisen aber dann Nachteile auf, dass, wenn es z.B. durch mechanische Einwirkungen auf den äußeren Mantel zu einem Anriss in der äußeren Umhüllung kommt, sich dieser bedingt durch den Haftverbund mit der darunter liegenden Schicht weiter ausbreiten und letztendlich bis zum Stahlgrund der Rohrleitung vordringen kann. Wie oben beschrieben, kann dann bei ungünstigen Bedingungen der Korrosionsangriff auf das Stahlrohr einsetzen.

Aufgabe der Erfindung ist es daher, eine mit mehreren Schichten kunststoffummantelte Rohrleitung aus Stahl zum Transport von flüssigen oder gasförmigen Medien anzugeben, bei der die Ummantelung einerseits den auftretenden Scherkräften bei Bearbeitung und Verlegung, insbesondere bei grabenloser Verlegung, standhalten kann, andererseits aber einen möglicherweise im äußeren Mantel vorhandenen Riss nicht an die darunter liegende Ummantelungsschicht und insbesondere nicht an den Stahlgrund des Rohrkörpers weiterleitet.

Diese Aufgabe wird ausgehend vom Oberbegriff in Verbindung mit dem kennzeichnenden Teil des Patentanspruches 1 gelöst. Vorteilhafte Weiterbildungen sind Bestandteil von Unteransprüchen.

Nach der Lehre der Erfindung wird eine kunststoffummantelte Rohrleitung aus Stahl zum Transport von Medien, wie Flüssigkeiten oder Gase, mit einer aus mindestens zwei separat auf die Rohre der Rohrleitung thermoplastisch aufgebrachten Schichten bestehenden Ummantelung bereitgestellt, die dadurch gekennzeichnet ist, dass die einzelnen Schichten im Zuge der Ummantelung nur kraftschlüssig miteinander verbunden werden, wobei mindestens die Oberfläche einer Schicht in der Kontaktebene mit einem die Haftreibung der Reibpartner erhöhenden Belag versehen ist.

Der große Vorteil der Erfindung besteht darin, dass einerseits ein stoffschlüssiger Haftverbund zwischen den Schichten vermieden wird, der sich nachteilig auf einen etwaigen Rissfortschritt in der Ummantelung auswirken würde, andererseits aber durch Erhöhung der Haftreibung einen ausreichenden Scherwiderstand bietet, der eine Relativverschiebung der Ummantelungsschichten zueinander bei der Bearbeitung der Rohrenden oder beim Verlegen der Rohrleitung verhindert.

Erfindungsgemäß kann der die Haftreibung der aufeinander liegenden Mantelschichten erhöhende Belag aus auf die Oberfläche der Ummantelungsschicht aufgebrachten und damit stoffschlüssig verbundenen Materialpartikeln bestehen. Die erhöhte Haftreibung wird erfindungsgemäß über eine Erhöhung der Rauigkeit zwischen den Reibpartnern, also z.B. der ersten und der zweiten Ummantelungsschicht realisiert. Entsprechend könnten z.B. bei einem dreischichtigen Aufbau zwischen der ersten und zweiten und der zweiten und dritten Ummantelungsschicht Materialpartikel zur Erhöhung der Haftreibung eingebracht sein.

In einer vorteilhaften Ausgestaltung der Erfindung sollte beim Aufbringen der Partikel die auf das Rohr aufgebrachte Ummantelungsschicht noch nicht erstarrt sein, damit sich die z.B. durch Aufstreuen aufgebrachten Partikel noch stoffschlüssig mit dieser Schicht verbinden können. Diese erste Ummantelungsschicht kann z.B. aus Epoxidharz, Polyethylen, Polypropylen, Polyurethan oder Polyamid bestehen.

Eine stoffschlüssige Verbindung der Schichten untereinander wird entweder dadurch vermieden, dass auf ein unpolares Kunststoffsystem, z.B. Polyethylen, ein polares System, wie z.B. Polyamid aufgebracht wird. Hierbei spielt es keine Rolle welche Temperatur die erste Schicht vor dem Aufbringen der zweiten Schicht noch aufweist, da eine stoffschlüssige Verbindung ausgeschlossen ist.

Wenn allerdings auf ein nicht polares erstes Kunststoffsystem, z.B. Polyethylen, ein weiteres nicht polares Kunststoffsystem, wie z.B. Polypropylen aufgetragen wird, kann durch eine entsprechende Temperaturführung die Stoffschlüssigkeit verhindert werden.

Die auf die Oberfläche der ersten Ummantelungsschicht aufgebrachten Partikel können aus beliebigem Material bestehen, bewährt haben sich z.B. Partikel aus Kunststoff, anorganischen Granulaten oder Sand.

Es ist aber auch möglich, diese Partikel mittels eines nachträglich auf die Ummantelungsschicht aufgetragenen Klebers stoffschlüssig zu verbinden, falls dies fertigungstechnisch sinnvoller sein sollte.

Die Materialpartikel selbst sollten gleichmäßig auf der Oberfläche der Ummantelungsschicht verteilt sein, um gleichmäßig über die Kontaktebene der Ummantelungsschichten verteilte Reibungsverhältnisse bezüglich der Haftreibung zu erreichen.

Die Partikel selbst sollten eine Größe aufweisen, die kleiner ist als die Schichtdicke der dünnsten aufzubringenden Ummantelungsschicht, damit sie sich nicht durch die Ummantelungsschicht nach außen durchdrücken können und Oberflächenfehler verursachen.

Bewährt haben sich Partikel mit Korngrößen von 0,1 bis 3 mm, vorteilhaft jedoch Korngrößen von 0,2 bis 0,5mm.

Die vorgenannten Ausführungsvarianten der Erfindung sind jedoch nicht nur auf kunststoffummantelte Stahlrohre bzw. Rohrleitungen beschränkt, sondern ebenso für aus Vollkunststoff bestehende Rohrleitungen, die mit einer zusätzlichen Kunststoffummantelung, z.B. als Schutz vor mechanischen Beschädigungen, versehen werden sollen, anwendbar.

In einer Prinzip-Skizze ist die Erfindung am Beispiel einer mit Kunststoff ummantelten Stahlrohrleitung dargestellt.

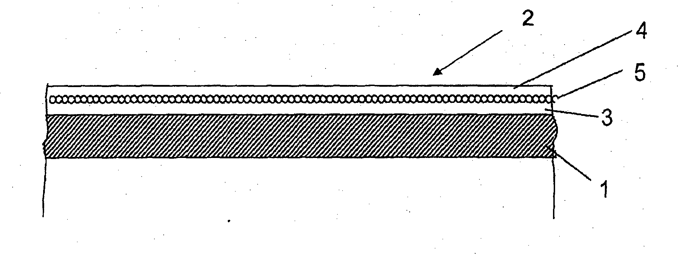

In der einzigen Figur ist in einer Prinzipskizze ein Ausschnitt einer erfindungsgemäß hergestellten kunststoffummantelten Rohrleitung aus Stahl dargestellt, bestehend aus einem Rohr 1 einer Rohrleitung, dessen Außenoberfläche mit einer zweischichtigen Körrosionsschutzummantelung 2 versehen ist. Das Rohr 1 kann ein längsnahtgeschweißtes, schraubennahtgeschweißtes oder nahtloses Rohr sein.

Die Kunststoffummantelung 2 besteht in diesem Fall aus einer ersten 2 mm dicken auf das Rohr 1 aufgebrachten Polyethylenschicht 3 als Korrosionsschutz und einer darauf aufgebrachten zweiten Schicht aus 2 mm dickem Polyamid 4 als mechanischem Schutz.

Nicht dargestellt ist hier, dass die beiden Schichten 3, 4 nicht stoffschlüssig sondern nur kraftschlüssig miteinander verbunden sind.

Erfindungsgemäß wurde die erste Schicht 3 zur Erhöhung der Haftreibung vor dem Aufbringen der zweiten Schicht 4, mit die Rauigkeit erhöhenden Partikeln 5 versehen, so dass mit Aufbringen der Schicht 4 eine höhere Haftreibung durch eine mechanische Verklammerung mit der Schicht 3 vorhanden ist.

Erfindungsgemäß wurde dabei die Oberfläche der Polyethylenschicht 3 im Zuge des Aufbringens auf das Rohr 1 mit Partikeln 5, in diesem Fall mit Granulat aus Polyethylen versehen, die sich mit der heißen noch nicht erstarrten Oberfläche der Polyethylenschicht 3 stoffschlüssig durch Anschmelzen verbunden haben. Die Größe der Partikel 5 ist dabei so angepasst, dass sie nicht größer sind als die Dicke der einzelnen Ummantelungsschichten, sich aber nach dem Anschmelzen und Verbinden noch deutlich von der Oberfläche als Rauigkeitsspitzen hervorheben und somit zum "Verkrallen" mit der nachfolgend aufgebrachten Polyamidschicht 4 geeignet sind und dadurch die Haftreibung deutlich erhöhen.

### Bezugszeichenliste

| **Nr.** | **1 Bezeichnung** |
|---|---|
| 1 | Rohr |
| 2 | Kunststoffummantelung |
| 3 | Polyethylenschicht |
| 4 | Polyamid |
| 5 | Partikel |

## Patentansprüche

1. Kunststoffummantelte Rohrleitung aus Stahl zum Transport von Medien, wie Flüssigkeiten oder Gase, mit einer aus mindestens zwei separat auf die Rohre (1) der Rohrleitung thermoplastisch aufgebrachten Schichten (3, 4) bestehenden Ummantelung (2),
**dadurch gekennzeichnet,**
**dass** die einzelnen Schichten (3, 4) im Zuge der Ummantelung nur kraftschlüssig miteinander verbunden sind, wobei mindestens die Oberfläche einer Schicht (3, 4) in der Kontaktebene mit einem die Haftreibung der Reibpartner erhöhenden Belag versehen ist.

2. Rohrleitung nach Anspruch 1,
**dadurch gekennzeichnet,**
**dass** der Belag aus auf die Oberfläche der Schicht (3,4) aufgebrachten und damit stoffschlüssig verbundenen Partikeln (5) besteht.

3. Rohrleitung nach Anspruch 2,
**dadurch gekennzeichnet,**
**dass** der Belag aus auf die Oberfläche der Schicht (3,4) im heißen Zustand aufgebrachten und damit stoffschlüssig verbundenen Partikeln (5) besteht.

4. Rohrleitung nach Anspruch 2,
**dadurch gekennzeichnet,**
**dass** die Partikel (5) mittels eines Klebers mit der Oberfläche mindestens einer Schicht (3, 4) stoffschlüssig verbunden sind.

5. Rohrleitung nach einem der Ansprüche 2 bis 4,
**dadurch gekennzeichnet,**
**dass** die Partikel (5) aus Kunststoff, anorganischen Granulaten oder Sand bestehen.

6. Rohrleitung nach einem der Ansprüche 2 bis 5,
**dadurch gekennzeichnet,**
**dass** die Partikel (5) gleichmäßig auf der Oberfläche mindestens einer Schicht (3, 4) verteilt sind.

7. Rohrleitung nach einem der Ansprüche 2 bis 6,
**dadurch gekennzeichnet,**
**dass** die Partikel (5) eine Größe aufweisen, die kleiner ist, als die Schichtdicke der dünnsten aufzubringenden Schicht (3, 4).

8. Rohrleitung nach Anspruch 7,
**dadurch gekennzeichnet,**
**dass** die Partikel (5) eine Korngröße von 0,1 bis 3 mm aufweisen.

9. Rohrleitung nach Anspruch 8,
**dadurch gekennzeichnet,**
**dass** die Partikel (5) eine Korngröße von 0,2 bis 0,5 mm aufweisen.

10. Rohrleitung nach mindestens einem der Ansprüche 1 bis 9,
**dadurch gekennzeichnet,**
**dass** die Schichten (3,4) der Kunststoffummantelung (2) aus Epoxidharz, Polyethylen, Polypropylen, Polyurethan und/oder Polyamid bestehen.

## Claims

1. Plastic-clad steel pipeline for transporting media, such as liquids or gases, having a cladding (2) comprising at least two layers (3, 4) separately applied thermoplastically to the pipes (1) of the pipeline,
**characterised in that**
the individual layers (3, 4) are bonded to one another only non-positively in the course of the cladding, wherein at least the surface of one layer (3, 4) is provided with a coating in the contact plane which increases the static friction of the friction partners.

2. Pipeline according to claim 1,
**characterised in that**
the coating comprises particles (5) applied to the surface of the layer (3, 4) and bonded thereto by material locking.

3. Pipeline according to claim 2,
**characterised in that**
the coating comprises particles (5) applied to the surface of the layer (3, 4) in the hot state and bonded thereto by material locking.

4. Pipeline according to claim 2,
**characterised in that**
the particles (5) are bonded to the surface at least of one layer (3, 4) by material locking by means of an adhesive.

5. Pipeline according to one of claims 2 to 4,
**characterised in that**
the particles (5) are made of plastic, inorganic granules or sand.

6. Pipeline according to one of claims 2 to 5,
**characterised in that**
the particles (5) are distributed uniformly on the surface at least of one layer (3, 4).

7. Pipeline according to one of claims 2 to 6,
**characterised in that**
the particles (5) have a size which is smaller than the layer thickness of the thinnest layer (3, 4) to be applied.

8. Pipeline according to claim 7,
**characterised in that**
the particles (5) have a grain size of from 0.1 to 3 mm.

9. Pipeline according to claim 8,
**characterised in that**
the particles (5) have a grain size of from 0.2 to 0.5 mm.

10. Pipeline according to at least one of claims 1 to 9,
**characterised in that**
the layers (3, 4) of the plastics cladding (2) are made of epoxy resin, polyethylene, polypropylene, polyurethane and/or polyamide.

## Revendications

1. Conduite en acier enveloppée de matières plastiques pour le transport de substances telles que des liquides et des gaz avec une enveloppe (2) composée d'au moins deux couches (3, 4) séparées appliquées par voie thermoplastique sur les tuyaux (1) de la conduite, **caractérisée en ce**
**que** les différentes couches (3, 4) ne sont reliées entre elles que par verrouillage mécanique au cours de l'enveloppement, la surface d'une couche (3, 4) au moins étant prévue dans le plan de contact avec un revêtement augmentant le frottement par adhérence des partenaires de friction.

2. Conduite selon la revendication 1,
**caractérisée en ce**
**que** le revêtement se compose de particules (5) appliquées à la surface de la couche (3, 4) et dès lors reliées par accouplement.

3. Conduite selon la revendication 2,
**caractérisée en ce**
**que** le revêtement se compose de particules (5) appliquées à l'état chaud à la surface de la couche (3, 4) et dès lors reliées par accouplement.

4. Conduite selon la revendication 2,
**caractérisée en ce**
**que** les particules (5) sont reliées par accouplement à l'aide d'un adhésif avec la surface d'au moins une couche (3, 4).

5. Conduite selon l'une des revendications 2 à 4,
**caractérisée en ce**
**que** les particules (5) se composent de plastique, de granulats inorganiques ou de sable.

6. Conduite selon l'une des revendications 2 à 5,
**caractérisée en ce**
**que** les particules (5) sont réparties uniformément la surface d'au moins une couche (3, 4).

7. Conduite selon l'une des revendications 2 à 6,
**caractérisée en ce**
**que** les particules (5) présentent une dimension inférieure à l'épaisseur de la couche la plus fine à appliquer (3,4).

8. Conduite selon la revendication 7,
**caractérisée en ce**
**que** les particules (5) présentent une taille des grains de 0,1 à 3 mm.

9. Conduite selon la revendication 8,
**caractérisée en ce**
**que** les particules (5) présentent une taille des grains de 0,2 à 0,5 mm.

10. Conduite selon au moins l'une des revendications 1 à 9,
**caractérisée en ce**
**que** les couches (3, 4) de l'enveloppe en plastique (2) se composent de résine époxy, de polyéthylène, de polypropylène, de polyuréthane et/ou de polyamide.
